(19) Europäisches Patentamt / European Patent Office / Office européen des brevets

(11) **EP 1 703 344 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*G05B 17/02* (2006.01)    *F23N 5/24* (2006.01)

(21) Anmeldenummer: **06101492.4**

(22) Anmeldetag: **09.02.2006**

(54) **Verfahren zum Herstellen einer modellbasierten Regeleinrichtung**

Method for producing a model based control unit

Procédé pour produire une unité de régulation basée sur un modèle

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.02.2005 DE 102005005963**

(43) Veröffentlichungstag der Anmeldung:
**20.09.2006 Patentblatt 2006/38**

(73) Patentinhaber: **Alstom Technology Ltd 5400 Baden (CH)**

(72) Erfinder:
• **Paschereit, Christian, Oliver**
  **14109, Berlin (DE)**
• **Schuermans, Bruno**
  **4057, Basel (CH)**

(56) Entgegenhaltungen:
**EP-A- 0 918 194**    **EP-A- 1 229 226**
**DE-A1- 10 325 455**    **US-A1- 2004 088 060**

**Beschreibung**

**Technisches Gebiet**

Die Erfindung betrifft ein Verfahren zum Herstellen einer Regeleinrichtung zum Kontrollieren von Druckpulsationen eines Verbrennungsprozesses, der in einer mit Hochdruck betriebenen Brennkammer einer mit mehreren Brennern arbeitenden Gasturbine abläuft, wobei ein Regler der Regeleinrichtung mit einem Regelalgorithmus arbeitet, der auf einem mathematischen Gesamtmodell des akustischen Verhaltens des Verbrennungssystems basiert. Ein derartiges Verfahren ist aus DE 103 25 455 A1 bekannt.

**Stand der Technik**

Gasturbinen werden üblicherweise auf der Basis der Verbrennung fossiler Brennstoffe betrieben. Verfahren zur Verbrennung fossiler Brennstoffe sind heutzutage durch zwei Hauptanforderungen bestimmt, die sich gegenseitig im Weg stehen. Auf der einen Seite sollte ein Verbrennungsprozess die höchstmögliche Effektivität aufweisen, um auf diese Weise Brennstoff zu sparen und die $CO_2$-Emissionen zu reduzieren. Dies lässt sich bei besonders hohen Prozesstemperaturen erreichen. Auf der anderen Seite sollte der Verbrennungsprozess so durchgeführt werden, dass die Schadstoffemissionen, insbesondere die Emission von $NO_x$, minimiert sind. Die Entstehung von $NO_x$ nimmt jedoch mit zunehmender Prozesstemperatur überproportional zu.

Herkömmliche Gasturbinensysteme arbeiten üblicherweise unter der Voraussetzung einer mageren vorgemischten Verbrennung und benötigen hierfür Brennkammern des Ring-, Büchsen-, Büchsen-Ring- oder Silo-Typs. Derartige Verbrennungssysteme beruhen typischerweise auf einer wirbelstabilisierten Flamme, in der eine kleine Rezirkulationszone am Auslass der Brenner durch aerodynamische Mittel ausgebildet ist. Hierdurch wird die Zündung und das Ausbrennen in einer sehr kompakten Verbrennungszone ermöglicht, was in sehr kurzen Verweilzeiten (im Bereich von wenigen ms) resultiert und folglich die Verwendung sehr kompakter Brennkammern erlaubt.

Ein derartiges System wird üblicherweise mit einer sehr mageren Flamme ($\lambda \geq 2$) bei etwa 20bar betrieben, wobei der Oxidator, üblicherweise Luft, durch Verdichtung auf etwa 720°K vorgewärmt wird, und wobei die Flammentemperatur bei etwa 1750°K liegt. Typische Systeme weisen eine Zündverzögerungszeit im Bereich von 3ms bis 5ms auf, wobei die Verweilzeiten im Bereich von 20ms bis 30ms liegen. Angestrebte Emissionsgrenzen sind für UHC und CO unter 10ppm und für $NO_x$ ebenfalls unter 10ppm, jeweils normalisiert bei 15% $O_2$. Diese Beispielsbedingungen beziehen sich auf eine Gasturbine, die in einem Volllastbetriebsmodus betrieben wird, wobei gleichzeitig die oben genannten Randbedingungen eingehalten werden müssen.

Ein Nachteil derartiger Systeme liegt in der Entstehung selbst induzierter Druckpulsationen. Diese entstehen aus den kleinen Rezirkulationszonen, die sich am Auslass des Brenners ausbilden. Diese Rezirkulationszonen sind nicht stabil und können zu Druckänderungen führen, die mit Bezug auf die Brennkammer als Pulsationen bezeichnet werden.

Diese Tendenz zu Druckschwankungen bedeutet, dass es erforderlich ist, ein solches System mit eingeschränkten Betriebsbedingungen zu betreiben, um die Druckpulsationen zu minimieren. Druckpulsationen können dramatische Auswirkungen auf die mechanische Festigkeit des Verbrennungssystems haben. Folglich haben vom Verbrennungsprozess abhängige Druckpulsationen die Wirkung, die Bandbreite der Betriebsbedingungen, in denen das Verbrennungssystem mit niedrigen Emissionen und hohem Wirkungsgrad betrieben werden kann, zu begrenzen.

Als eine Folge dieser einschränkenden Wirkungen der Pulsationen auf die Betriebsbedingungen gewinnt die Kontrolle akustischer Vibrationen, die zu Pulsationen führen, mehr und mehr an Bedeutung. Tatsächlich ist die Beherrschung der akustischen Vibrationen ein wesentliches Kriterium bei der Konstruktion, Entwicklung und Wartung von Verbrennungssystemen.

Die Wege zum Kontrollieren der Druckpulsationen können im wesentlichen in zwei Kategorien unterteilt werden, zum einen in passive Mittel und zum anderen in aktive Kontrolle. Passive Mittel umfassen ein spezielles Design des Verbrennungssystems, um Instabilitäten zu vermeiden oder um akustische Energie zu absorbieren. Aktive Kontrolle umfasst den Versuch, Pulsationen unter der Verwendung aktiver Maßnahmen zu löschen.

Aktive Kontrolle beruht auf dem Prinzip, permanent eine oder mehrere Strömungsvariablen zu stören, um zu versuchen, die Druckpulsationen aufzulösen. In diesem Sinne ist die aktive Kontrolle relative nahe mit dem Prinzip des Antischalls verwandt, bei dem die Wirkungen von ersten Schallwellen durch eine Überlagerung mit zweiten Schallwellen ausgelöscht werden.

Eine aktive Kontrolle mit geschlossener Schleife, also eine Regelung, umfasst die Erfassung der Pulsationen, die durch das Verbrennungssystem erzeugt werden mit einem Sensor. Der Sensor erfasst ein Signal, das mit dem akustischen Feld der Gasturbine korreliert. Üblicherweise wird hierzu ein Drucksignalgeber verwendet. Das Signal des Sensors wird über einen Regler zu einem Aktuator rückgeführt. Der Aktuator variiert dann eine der Strömungsvariablen, wie z.B. den Strom der Verbrennungsluft oder den Brennstoffstrom, derart, dass dadurch die vom Brenner verursachten Pulsationen reduziert werden. Alternativ kann der Aktuator auch auf einen anderen, die Verbrennung beeinflussenden wichtigen Parameter einwirken.

Der Regler verwendet das Sensorsignal, um zu bestimmen, wie der Aktuator den ausgewählten Verbrennungsparameter beeinflussen soll. Der Regler ist mit einem geeigneten Regelalgorithmus ausgestattet. Regelalgorithmen können in zwei Gruppen unterteilt werden. Modellbasierte Regler und adaptive oder selbstjustierende Regler. Adaptive und selbstjustierende Regler benötigen kein Modell des Systems.

In einem modellbasierten Regler ist der Regelalgorithmus auf einem mathematischen Modell des Systems aufgebaut. Das mathematische Modell, das die thermoakustische Dynamik des Systems beschreibt, kann entweder aus physikalischem Wissen bzw. aus physikalischen Zusammenhängen des Systems oder mit einer Experimentiertechnik ermittelt werden. Das Bestimmen eines mathematischen Models mittels einer Experimentiertechnik wird häufig auch als Systemidentifikation bezeichnet.

Sobald die relevanten Daten für das mathematische Modell bestimmt worden sind, kann ein aktiver Regler hergeleitet werden, der auf diesen Daten basiert. Hierzu können viele herkömmliche Synthesetechniken verwendet werden.

Allerdings ist die Bestimmung der Daten für das mathematische Modell nicht trivial. Im Betrieb befindliche Gasturbinen besitzen eine für Messungen feindliche Umgebung und sind nicht unbedingt dafür geeignet, in der darin geführten Gasströmung Messungen durchzuführen. Bei Gasturbinen liegen außerdem ernsthafte Raumbeschränkungen vor, so dass es nicht möglich ist, großbauende Sensor- oder Aktuator-Apparaturen zu verwenden. Da die Brauchbarkeit jeder auf einem mathematischen Modell basierenden Technik von der Qualität der im Modell verwendeten Daten abhängt, ist es von erheblicher Bedeutung, dass die Daten möglichst genau die Charakteristiken des Verbrennungssystems widerspiegeln.

**Darstellung der Erfindung**

Hier setzt die Erfindung an. Die Erfindung, wie sie in den Ansprüchen gekennzeichnet ist, beschäftigt sich mit dem Problem, für ein Verfahren der eingangs genannten Art eine verbesserte Ausführungsform anzugeben, die insbesondere mit einem vergleichsweise geringen Aufwand die Bereitstellung einer zuverlässig arbeitenden Regeleinrichtung ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zunächst das mathematische Gesamtmodell in mittels physikalischer Zusammenhänge berechenbare analytische Untermodelle und mittels experimenteller Messungen bestimmbare empirische Untermodelle zu unterteilen. Anschließend können die empirischen Untermodelle dadurch bestimmt werden, dass die hierzu erforderlichen experimentellen Messungen an einer Mono-Brenner-Umgebungsdruck-Prüfstand-Gasturbine durchgeführt werden. Desweiteren werden die analytischen Untermodelle unter Berücksichtung der zur Bestimmung der empirischen Untermodelle durchgeführten experimentellen Messungen berechnet. Schließlich werden die bestimmten empirischen Untermodelle und die berechneten analytischen Untermodelle miteinander vernetzt, und zwar unter Berücksichtigung einer rechnerischen Transformation, welche den Übergang von der Mono-Brenner-Umgebungsdruck-Prüfstand-Gasturbine auf die Multi-Brenner-Hochdruck-Gasturbine schafft, bei welcher die auf dem Gesamtmodell basierende Regeleinrichtung zur Kontrolle der Druckpulsationen eingesetzt werden soll. Durch diese Vorgehensweise lassen sich Probleme reduzieren oder vermeiden, die beim Identifizieren komplexer mathematischer Modelle entstehen können. Beispielsweise wenn nicht sicher ist, ob sich das jeweilige System bzw. Modell asymptotisch stabil verhält oder nicht. Insbesondere lassen sich nämlich die einzelnen Untermodelle so betreiben, dass sie mit hinreichender Sicherheit asymptotisch stabil arbeiten, was die Identifikation der empirischen Untermodelle erheblich vereinfacht.

Die Verwendung einer Mono-Brenner-Umgebungsdruck-Prüfstand-Gasturbine, also eines Prüfstands mit einer Prüfstand-Gasturbine, die nur einen einzigen Prüfstand-Brenner aufweist und deren Prüfstand-Brennkammer mit atmosphärischem Umgebungsdruck arbeitet, reduziert den apparativen Aufwand für die Identifikation der empirischen Untermodelle. Beispielsweise kann der Prüfstand mit einer großen Anzahl an Lautsprechern ausgestattet werden, wodurch es für die Systemidentifikation möglich ist, ein Anregungssignal mit Hilfe der Lautsprecher in das System einzubringen und die Antwort des Systems mit Hilfe eines Felds von Mikrofonen zu messen. Bei einer tatsächlichen Multi-Brenner-Hochdruck-Gasturbine ist es sehr schwierig und teuer ein Feld von Mikrofonen zu installieren. Desweiteren ist es nahezu unmöglich, eine solche Gasturbine mit geeigneten Laufsprechern auszustatten. Zum einen findet sich schlichtweg kein Platz, um Lautsprecher, die insbesondere wassergekühlt sind, an einer kompakten Gasturbine zu montieren. Zum anderen müssten die Lautsprecher für eine Anwendung an der Gasturbine deutlich größer und leistungsfähiger sein als bei einer Anwendung auf dem Prüfstand. Denn in der Hochdruck-Gasturbine ist die Gasdichte etwa 10- bis 30mal größer als im Prüfstand, was auf die hohen Druckverhältnisse einer echten Gasturbine zurückzuführen ist. Folglich müssten die Lautsprecher 10- bis 30mal leistungsfähiger sein als solche, die für den Prüfstand geeignet sind. Derart große Lautsprecher wären völlig unpraktisch und sehr unhandlich und wären aufgrund der engen Platzverhältnisse nicht montierbar.

Die Aufteilung des mathematischen Gesamtmodells in empirische und analytische Untermodelle ermöglicht die Bestimmung bzw. die Identifikation der empirischen Untermodelle mit Hilfe des vergleichsweise einfachen Prüfstands. Mit Hilfe der Transformation lässt sich dann das vernetzte, also wieder zusammengesetzte Gesamtmodell auf die Verhältnisse einer tatsächlichen Gasturbine übertragen, wodurch sich das so gewonnene Gesamtmodell für eine Regeleinrichtung einer tatsächlichen Gasturbine nutzen lässt. Beispielsweise kann der Regler der Regeleinrichtung mittels der vernetzten Untermodelle hergeleitet oder abgeleitet werden. Hierbei können herkömmliche Methoden und Vorgehensweisen zur Ermittlung eines Reglers anhand eines gegebenen mathematischen Modells verwendet werden.

Die empirischen Untermodelle können beispielsweise Wechselwirkungen wenigstens eines Brenners und der Brennkammer repräsentieren und/oder Reaktionen einer Stelleinrichtung zum Einstellen einer den Brenner zugeführten Brennstoffmenge repräsentieren und/oder dynamische Vorgänge, die innerhalb der Prüfstand-Brennkammer von einer Referenzstelle bis zum Austritt des Prüfstand-Brenners in Gegenstromrichtung ablaufen, repräsentieren und/oder dynamische Vorgänge, die innerhalb der Prüfstand-Brennkammer von einer Referenzstelle bis zum Austritt der Prüfstand-Brennkammer in Stromrichtung ablaufen, repräsentieren. Durch ein analytisches Untermodell kann beispielsweise die Ausbreitung von Druckwellen in der Brennkammer repräsentiert sein.

Bei einer vorteilhaften Ausführungsform des Verfahrens kann vorgesehen sein, dass beim Bestimmen eines empirischen Untermodells zumindest ein anderes Untermodell hinsichtlich Geometrie und/oder Betriebsbedingungen variiert wird, während gleichzeitig das zu bestimmende empirische Untermodell nicht variiert wird. Besonders vorteilhaft ist dabei eine Weiterbildung, bei welcher die Variationen des wenigstens einen anderen Untermodells so durchgeführt werden, dass das Gesamtmodell asymptotisch stabil ist und/oder relativ kleine oder unkritische Pulsationsamplituden aufweist. Durch diese Vorgehensweise wird die präzise Identifikation des jeweils zu bestimmenden empirischen Untermodells erheblich vereinfacht.

Für die Bestimmung oder Identifikation der empirischen Untermodelle kann beispielsweise vorausgesetzt werden, dass die einzelne Untermodelle jeweils für sich stabil sind, so dass möglicherweise auftretende Instabilitäten durch die Rückschlussschleife (feedback loop) des Regelsystems verursacht sind. Die so identifizierten Untermodelle können zu einem Feedback-System kombiniert werden, also zu einem Netzwerk der berechneten und bestimmten Untermodelle. Das Netzwerk bzw. das Feedback-System repräsentiert das Gesamtsystem, das im Bereich seines Nennbetriebspunkts linearisiert ist. Ein derartiges Modell umfasst zwar nicht die nicht-linearen dynamischen Vorgänge des Systems, jedoch kann ein Regler, der ein linearisiertes System stabilisieren kann, zwangsläufig auch ein nicht-lineares System stabilisieren.

Das Identifizieren oder Bestimmen eines empirischen Untermodells kann wenigstens eine der folgenden Maßnahmen umfassen: Mit Hilfe wenigstens eines Lautsprechers werden Druckpulse einer bestimmten Frequenz an einer Referenzstelle in die Prüfstand-Brennkammer stromab des Prüfstand-Brenners eingeleitet. Der Druck einer Luftversorgung des Prüfstand-Brenners und/oder eine Brennstoffzuführung des Prüfstand-Brenners wird/werden moduliert, d.h., der Volumenstrom der zugeführten Luft bzw. des zugeführten Brennstoffs wird variiert. Eine Reaktion des Gesamtmodells wird mittels mehrerer zwischen der Referenzstelle und dem Austritt des Prüfstand-Brenners in Stromrichtung nebeneinander angeordneter Mikrofone gemessen. Aus den mit den Mikrofonen durchgeführten Messungen werden die Riemann-Konstanten f und g ermittelt, die beim Bestimmen eines anderen empirischen Untermodells und/oder beim Berechnen eines analytischen Untermodells herangezogen werden.

Die vorliegende Erfindung betrifft somit ein modellbasiertes aktives Regelungssystem für eine Gasturbine, wobei das zugehörige mathematische Modell ein modulares Netzwerk umfasst, bei dem berechnete theoretische bzw. analytische Untermodelle mit bestimmten experimentellen bzw. empirischen Untermodellen kombiniert werden, um daraus ein akustisches Modell eines Gasturbinenverbrennungssystems zu gewinnen. Die Erfindung bezieht sich auf ein Gasturbinenverbrennungssystem, bei dem eine aktive Regelung verwendet wird, um die Brennstoffversorgung der Brenner zu modulieren, um Verbrennungsinstabilitäten zu unterdrücken. Dabei bezieht sich die vorliegende Erfindung insbesondere auf Multi-Brenner-Verbrennungssysteme.

Weiterbildungen der Erfindung nutzen experimentelle Ergebnisse, die an einem Prüfstand mit nur einem Brenner und einer mit Umgebungsdruck arbeitenden Brennkammer gewonnen werden, in Verbindung mit analytischen Methoden, um ein akustisches Modell eines Multibrenner-Verbrennungssystems zu erhalten, das ein System zur Beeinflussung der Brennstoffzuführung umfasst. Auf der Basis dieses akustischen Modells kann dann für das Gesamtsystem ein Regler bzw. eine Regeleinrichtung hergeleitet werden.

Weiterbildungen der Erfindung können dazu verwendet werden, eine Regeleinrichtung für eine aktive Regelung von Verbrennungsinstabilitäten bereitzustellen. Die Regeleinrichtung wird dabei aus einem akustischen Netzwerkmodell hergeleitet, das die akustischen Eigenschaften eines Verbrennungssystems beschreibt. Der Vorteil eines Reglers, dessen Regelalgorithmus auf einem mathematischen Modell basiert, ist darin zu sehen, dass der Regler offline, also unabhängig vom Betrieb der Gasturbine abgestimmt und optimiert werden kann. Beispielsweise lassen sich dadurch kostenintensive Testläufe für die Gasturbine reduzieren oder vermeiden. Darüber hinaus lassen sich dadurch bessere, leistungsfähigere Regelalgorithmen verwenden, beispielsweise durch Anwendung der sogenannten optimalen Regeltheorie. Zusätzlich kann die Gefahr einer Beschädigung der Gasturbine, beispielsweise durch fehlerhafte Reglereinstellungen, reduziert werden.

Das der vorliegenden Erfindung zugrundeliegende Verfahren kombiniert verschiedene akustische Modulier- und Messtechniken, um ein modulares Netzwerkmodell zu generieren, welches das dynamische akustische Verhalten einer Gasturbine repräsentiert. Der Vorteil eines derartigen Verfahrens zur Bestimmung eines mathematischen Modells einer Gasturbine ist darin zu sehen, dass es gemessene Antworten der Gasturbinenkomponenten umfasst, ohne dass hierzu die jeweiligen Messungen an einer tatsächlichen Gasturbine durchgeführt werden müssen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

Fig. 1    eine vereinfachte Prinzipdarstellung von Elementen, die für eine Regeleinrichtung eines Mono-Brenners benötigt werden,

Fig. 2    eine stark vereinfachte Prinzipdarstellung von Komponenten, die von einer Regeleinrichtung für eine Multi-Brenner-Gasturbine benötigt werden,

Fig. 3    ein vereinfachtes Diagramm, das eine Anzahl von Untermodellen repräsentiert, das in einem Brenner ein Netzwerk akustischer Elemente repräsentiert, gemäß einer Ausführungsform der vorliegenden Erfindung,

Fig. 4    ein Flussdiagramm, das vereinfacht Schritte repräsentiert, die an der Bestimmung eines modellbasierten aktiven Reglers für eine Gasturbine beteiligt sind, entsprechend einer Ausführungsform der vorliegenden Erfindung,

Fig. 5    einen Druckverlauf gegenüber der Zeit für einen $H_\infty$-Regler, der entsprechend einer Ausführungsform der vorliegenden Erfindung hergeleitet ist,

Fig. 6    einen Verlauf einer spektralen Druckamplitude mit und ohne Regelung bei einem $H_\infty$-Regler, der unter Verwendung einer Ausführungsform der vorliegenden Erfindung hergeleitet ist,

Fig. 7    eine stark vereinfachte Prinzipdarstellung eines Prüfstands,

Fig. 8    ein vereinfachtes Blockdiagramm eines modularen Netzwerks eines mathematischen Gesamtmodells.

**Wege zur Ausführung der Erfindung**

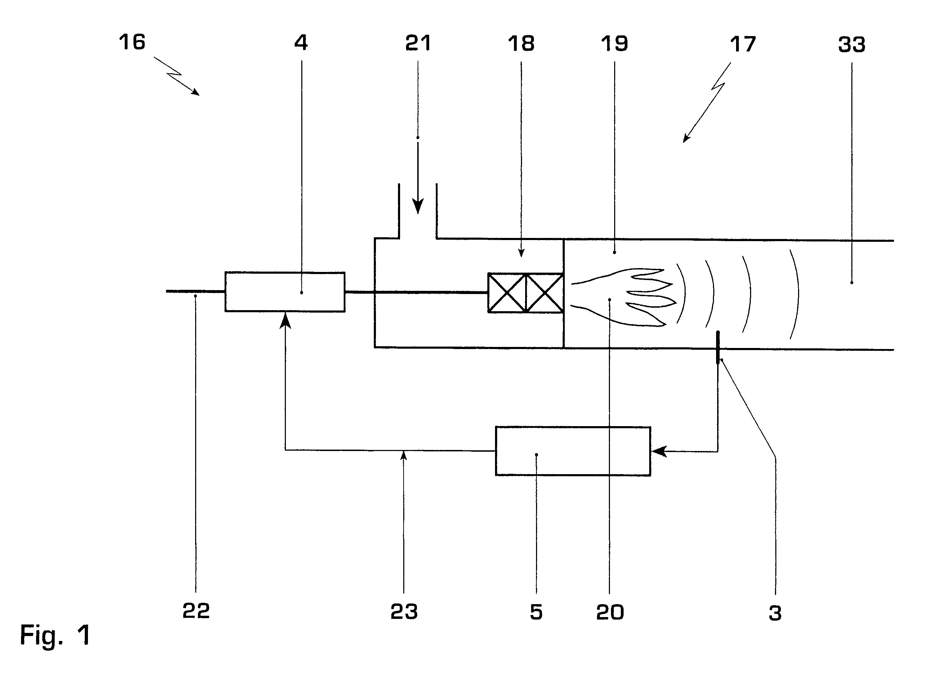

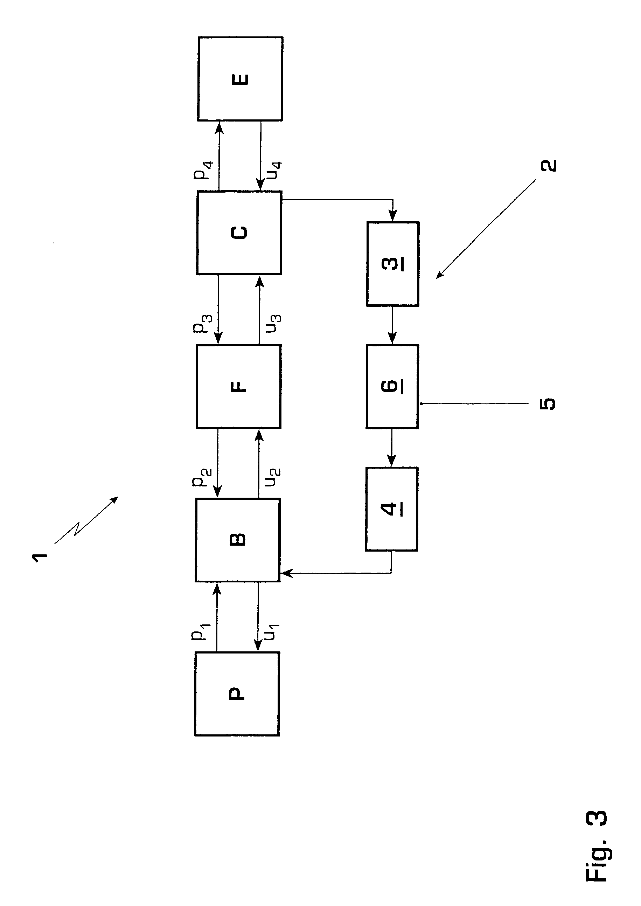

Entsprechend Fig. 1 umfasst ein Prüfstand 16, der erfindungsgemäß als Mono-Brenner-Umgebungsdruck-Gasturbine 17 ausgestaltet ist, nur einen einzigen Brenner 18, der in einer Brennkammer 19 eine Flamme 20 mit nicht näher bezeichneter Rezirkulationszone erzeugen kann. Dabei arbeitet die Brennkammer 19 mit atmosphärischem Umgebungsdruck. Die für die Verbrennungsreaktion benötigte Luft wird dabei über eine Luftversorgung 21 zugeführt, allerdings ohne nennenswerten Druck. Grundsätzlich ist auch eine reine Ansaugung der Verbrennungsluft möglich. Des weiteren ist eine Brennstoffversorgung 22 vorgesehen, die den für den Verbrennungsprozess benötigen Brennstoff, vorzugsweise ein Gas, z.B. Erdgas, dem Brenner 18 zuführt. Der Brennstoffversorgung 22 ist ein Brennstoffstromaktuator 4 zugeordnet, der beispielsweise als linear arbeitendes Steuerventil ausgestaltet sein kann. Der Prüfstand 16 ist mit einer Regeleinrichtung 23 ausgestattet, die einen Regler 5 umfasst. Besagter Regler 5 arbeitet mit einem Regelalgorithmus (vgl. Position 6 in Fig. 3), der auf einem mathematischen Gesamtmodell des akustischen Verhaltens der Brennkammer 19 bzw. des gesamten Verbrennungssystems basiert. Der Regler 5 ist eingangsseitig an einen Drucksignalgeber 3 angeschlossen, der in der Brennkammer 19 auftretende Druckpulsationen erkennt und damit korrelierende Signale an den Regler 5 sendet. Ausgangsseitig ist der Regler 5 an den Brennstoffstromaktuator 4 angeschlossen, wodurch der Regler 5 über entsprechende Steuersignale den Brennstoffstromaktuator 4 betätigen kann. Der Regler 5 kann dadurch den Volumenstrom des dem Brenner 18 zugeführten Brennstoffs variieren bzw. modulieren.

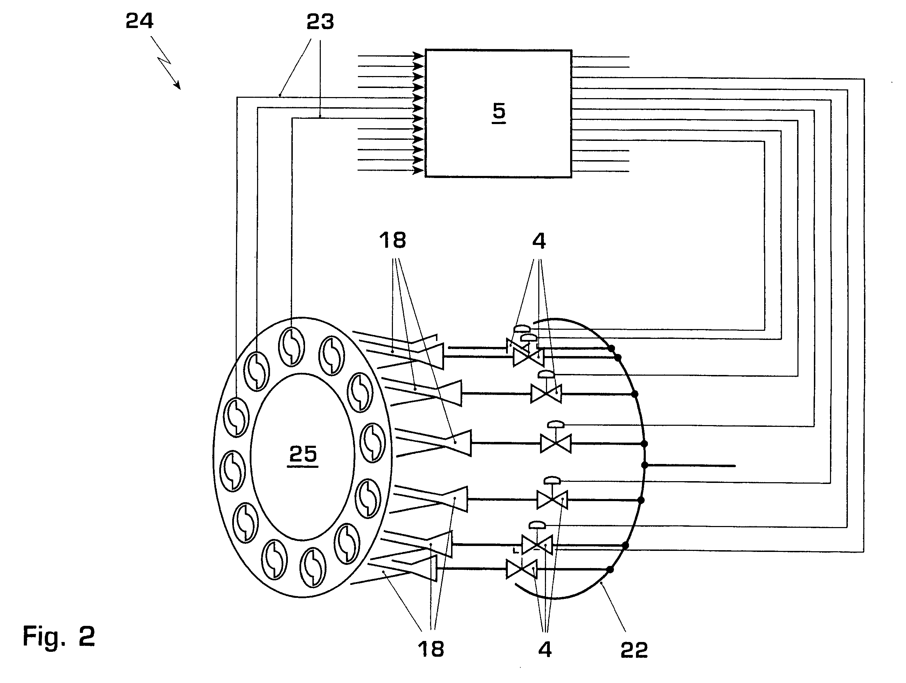

Entsprechend Fig. 2 umfasst eine übliche Gasturbine 24, die als Multi-Brenner-Hochdruck-Gasturbine ausgestaltet ist, mehrere Brenner 18, die beispielsweise ringförmig angeordnet sind. Eine gemeinsame Brennstoffversorgung 22 führt den Brennern 18 den Brennstoff zu. Dabei ist im gezeigten Ausführungsbeispiel jedem einzelnen Brenner 18 ein eigener Brennstoffstromaktuator 4 zugeordnet, so dass für jeden Brenner 18 der zugeführte Brennstoffstrom individuell steuerbar ist.

Der Regler 5 kann eingangsseitig mit mehreren, nicht näher gezeigten Drucksignalgebern verbunden sein, während er ausgangsseitig mit den Brennstoffstromaktuatoren 4 verbunden ist. Die mit Hilfe des Reglers 5 gebildete Regeleinrichtung 23 dient zum Kontrollieren von Druckpulsationen eines Verbrennungsprozesses, der in einer unter Hochdruck betriebenen Brennkammer 25 der Gasturbine 24 abläuft. Der Regelalgorithmus 6 des Reglers 5 basiert dann auf einem mathematischen Gesamtmodell des akustischen Verhaltens dieser Brennkammer 25.

Um einen Regelalgorithmus herleiten oder testen zu können, stellen Ausführungsformen der vorliegenden Erfindung ein dynamisches Akustikmodell eines Verbrennungssystems bereit, das eine Brennkammer 19, 25, wenigstens einen Brenner 18 und einen Aktuator 4 zur Modulation einer Brennstoffversorgung 22 umfasst. Zu diesem Zweck wird das gesamte Verbrennungssystem, einschließlich des Aktuators 4, als modulares Netzwerk akustischer Komponenten realisiert.

Fig. 3 zeigt beispielhaft ein Netzwerk akustischer Elemente gemäß einer Ausführungsform der vorliegenden Erfindung. Jeder Block in Fig. 3 repräsentiert ein Untermodell oder Untersystem innerhalb des gesamten Verbrennungssystems. Die Grenzen der in Fig. 3 gezeigten Elemente sind so definiert, dass sie entweder durch ein Untermodell, das analytisch berechnet wird, oder durch ein Untermodell, das experimentell bestimmt wird, repräsentiert sind.

Im einzelnen umfasst das in Fig. 3 gezeigte, mit 1 bezeichnete Netzwerk als akustische Elemente ein Plenum P, einen Brenner B, eine Flamme F, eine Brennkammer C und einem Brennkammerauslass E. Die mit dem durch die Elemente repräsentierten Verbrennungssystem zusammenwirkende Regeleinrichtung ist hier durch eine Rückwirkungsschleife 2 repräsentiert, die einen mit der Brennkammer C zusammenwirkenden Drucksignalgeber 3, einen dem Brenner B zugeordneten Brennstoffstromaktuator 4 sowie einen Regler 5 mit darin abgelegtem Regelalgorithmus 6 umfasst.

Die Untersysteme oder Untermodelle sind durch ihre Transfermatrizen charakterisiert. Derartige Transfermatrizen setzen das akustische Feld an beiden Seiten (Eingang und Ausgang) des jeweiligen Elements zueinander in Beziehung. Das akustische Feld charakterisiert sich dabei durch zwei quantitative Größen, einerseits durch den akustischen Druck (p) und andererseits durch die akustische Geschwindigkeit (u).

Für ein akustisches Element, das die akustischen Größen an zwei Positionen (u) und (d) zueinander in Beziehung setzt, ergibt sich folglich eine 2x2 Transfermatrix T, welche die akustischen Drücke und Geschwindigkeiten an beiden Seiten des jeweiligen Elements zueinander in Beziehung setzt:

$$\begin{bmatrix} p_d \\ u_d \end{bmatrix} = \begin{bmatrix} T_{11} & T_{12} \\ T_{21} & T_{22} \end{bmatrix} \begin{bmatrix} p_u \\ u_u \end{bmatrix}$$

Falls mehr als zwei Positionen miteinander in Beziehung stehen, was beispielsweise bei einer Multi-Brenner-Konfiguration mit einer Anzahl N Brennern der Fall ist, lässt sich die daraus resultierende Beziehung mittels einer 2Nx2N Matrix darstellen.

Das Brennerelement B und das Flammenelement F gemäß Fig. 3 sind beispielsweise jeweils durch eine 2Nx2N Transfermatrix repräsentiert. Diese Matrizen haben eine spezielle Form. Die jeweilige Matrix ist als Blockdiagonale ausgestaltet, die entlang ihrer Diagonalen eine Anzahl N von 2x2 Matrizen aufweist.

Wenn unterstellt wird, dass alle Brenner einer Multi-Brenner-Gasturbine die gleichen Eigenschaften aufweisen, dann sind diese N Matrizen der Diagonale identisch. Als ein Ergebnis dieser Eigenschaft oder Annahme ist es nur erforderlich, die Matrixdarstellung eines einzigen Brenners zu bestimmen. Denn im Falle von N Brennern kann die zugehörige Matrixdarstellung einfach dadurch erzielt werden, dass die Matrixdarstellung des einzelnen Brenners N-mal auf der Diagonalen der Matrix der Multi-Brenner-Anordnung platziert wird. Folglich kann eine 2x2 Transfermatrix, die experimentell mit Hilfe einer Mono-Brenner-Anlage ermittelt worden ist, direkt in einem akustischen Netzwerk eines Multi-BrennerSystems verwendet werden.

Die experimentelle Bestimmung der Transfermatrizen lässt sich wie folgt durchführen:

Das jeweilige Element, z.B. ein Brenner, wird in einem Prüfstand angeordnet, der eine Prüfstand-Gasturbine umfasst oder bildet. Die Prüfstand-Gasturbine weist nur einen einzigen Prüfstand-Brenner auf und besitzt eine Prüfstand-Brennkammer, die mit atmosphärischem Umgebungsdruck arbeitet. Der Prüfstand umfasst beispielsweise ein Rohr, das im Falle einer Verbrennung als Brennkammer dient. Der Prüfstand ist mit einer akustischen Messapparatur, wie z.B. Mikrofone und geeignete Verdrahtungen (hot wires), sowie mit einer Apparatur zur akustischen Anregung, wie z.B. Lautsprecher und Brennstoffstromaktuator, ausgestattet.

Mit Hilfe der Apparatur zur akustischen Anregung werden für den jeweiligen Testbetrieb Anregungs- oder Erregungs-Signale in das System eingeleitet. Die relevanten akustischen Größen, wie z.B. akustischer Druck und akustische Geschwindigkeit, lassen sich dann mit Hilfe der akustischen Messapparatur messen. Diese Messungen werden beispielsweise für verschiedene unterschiedliche Frequenzen wiederholt. Unterschiedliche Testphasen lassen sich dadurch voneinander abgrenzen, so dass die Anregungs-Signale mit Hilfe der Ausrüstung zur akustischen Anregung nacheinander stromauf oder stromab des jeweiligen Elements eingeleitet werden.

Alternativ lassen sich unterschiedliche Testphasen dadurch erzielen, dass die Geometrie des Eintritts oder des Austritts des Rohrs variiert wird. Zwei verschiedene Testphasen werden benötigt, um die zugehörige Transfermatrix zu bestimmen. Die verschiedenen Testphasen werden mit hochgestellten Buchstaben (A) und (B) kenntlich gemacht.

Die zugehörige Transfermatrix ergibt sich dann wie folgt:

$$\begin{bmatrix} p_d^A\, p_d^B \\ u_d^A\, u_d^B \end{bmatrix} = \begin{bmatrix} T_{11}\, T_{12} \\ T_{21}\, T_{22} \end{bmatrix} \begin{bmatrix} p_u^A\, p_u^B \\ u_u^A\, u_u^B \end{bmatrix} \Rightarrow \begin{bmatrix} T_{11}\, T_{12} \\ T_{21}\, T_{22} \end{bmatrix} = \begin{bmatrix} p_u^A\, p_u^B \\ u_u^A\, u_u^B \end{bmatrix}^{-1} \begin{bmatrix} p_d^A\, p_d^B \\ u_d^A\, u_d^B \end{bmatrix}$$

Es ist festzuhalten, dass die Wahl der Grenzen dieser Elemente grundsätzlich willkürlich ist. Jedoch können die in Fig. 3 gewählten Grenzen entweder durch ein Untermodell, das analytisch berechenbar ist, oder durch ein Untermodell, das experimentell bestimmbar ist, repräsentiert sein.

Üblicherweise kann die Wellenausbreitung in der Brennkammer durch die Verwendung eines analytischen Untermodells repräsentiert werden. Dies ist darauf zurückzuführen, dass eine reine akustische Wellenausbreitung vergleichsweise leicht zu modulieren ist. Dennoch ist die Durchführung akustischer Messungen in einem tatsächlichen Verbrennungssystem vergleichsweise schwierig. Dies ist bei einer Gasturbine auf die dort vorliegenden hohen Temperaturen, Drücke und begrenzten Zugangsmöglichkeiten zurückzuführen.

Jedenfalls sind die komplexen Wechselwirkungen eines Brenners und des Verbrennungsprozesses nur relativ schwierig mit einem analytischen Modell nachzubilden, so dass experimentelle Messungen erforderlich sind. Die Antwort oder Reaktion des Brennstoffstromaktuators ist ebenfalls sehr schwierig zu modellieren, so dass auch dieses Element experimentell bestimmt werden muss. Die hierzu erforderlichen Experimente werden an einem Prüfstand durchgeführt, der als Mono-Brenner-Umgebungsdruck-Prüfstand-Gasturbine ausgestaltet ist. Der Prüfstand ist mit Lautsprechern und Mikrofonen ausgestattet, um einerseits das System anregen zu können und um andererseits die Antwort des Systems messen zu können. Die experimentellen Messwerte oder Eingangsdaten werden durch Messen von akustischen Transferfunktionen oder akustischen Transfermatrizen ermittelt. Die Matrizen ermöglichen dann eine vollständige Beschreibung der Beziehung zwischen zwei akustischen Größen innerhalb bzw. durch das jeweilige Element.

Beispielsweise wird die Antwort des Brennstoffstromaktuators dadurch ermittelt, dass entsprechende Signale an den Aktuator gesendet werden, und dass seine Reaktion oder Antwort auf den Verbrennungsprozess mit Hilfe der Transferfunktion-Messtechnik gemessen wird.

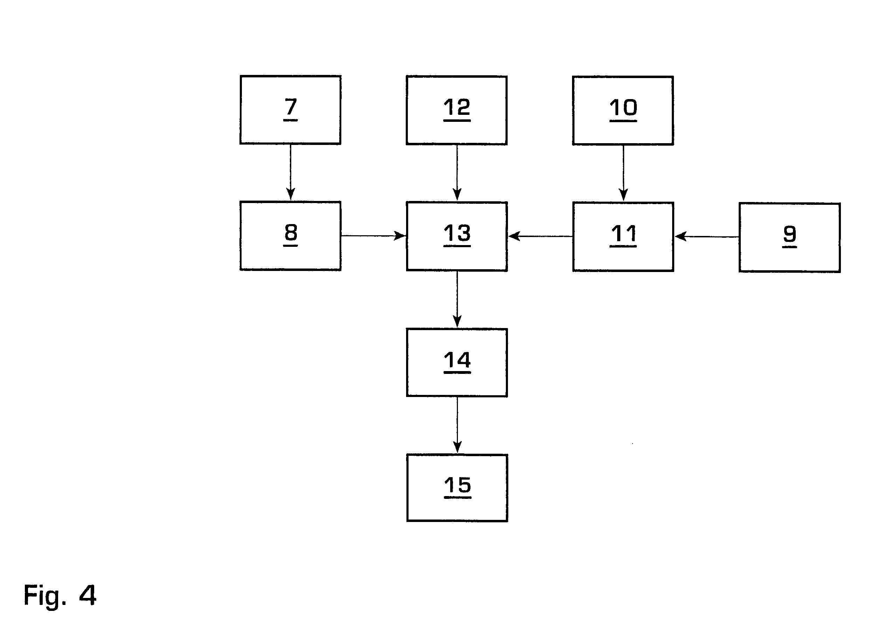

Ein Flussdiagramm der Schritte, die bei der Ermittlung eines modellbasierten aktiven Reglers für eine Gasturbine beteiligt sind, sind in Fig. 4 wiedergegeben. Dabei sind die einzelnen Schritte durch Blöcke symbolisiert. Block 7 repräsentiert die Messungen der Transfermatrizen mit Hilfe der Mono-Brenner-Umgebungsdruck-Prüfstand-Gasturbine. Block 8 repräsentiert die Ermittlung der Transfermatrizen für die einzelnen Elemente. Block 9 repräsentiert ein analytisches Untermodell. Block 10 repräsentiert das numerische Modellieren eines Akustikmodells der Gasturbinengeometrie. Block 11 repräsentiert die Erzeugung von Transfermatrizen für einzelne Elemente. Block 12 umschreibt die Identifikation und Eingrenzung des Problems thermoakustischer Pulsationen bei Gasturbinen. Zentrales Element ist hier Block 13, der das thermoakustische dynamische Netzwerkmodell der Gasturbine, einschließlich des Brennstoffstromaktuators, repräsentiert. Dies ist quasi das mit Hilfe des erfindungsgemäßen Verfahrens hergestellte, durch ein Netzwerk aus analytischen und empirischen Untermodellen zusammengesetzte Gesamtmodell des Regelalgorithmus. In einem nachfolgenden Schritt wird gemäß Block 14 der Regler mit Hilfe des Regelalgorithmus mittels Synthese-Verfahren und Simulations-Verfahren hergeleitet. Anschließend wird in Block 15 der gefundene Regler in die jeweilige Gasturbine implementiert und getestet.

Demnach kann der eigentliche Regelalgorithmus hergeleitet werden, sobald alle relevanten Daten durch die zuvor beschriebene Kombination von experimentellen und analytischen Maßnahmen ermittelt worden sind.

Grundsätzlich kann zur Ableitung eines Reglers jede geeignete Synthesetechnik verwendet werden, wenn die relevanten Daten vorliegen. Beispielsweise kann ein $H_\infty$-Regler verwendet werden. In diesem Beispiel ist der Regler in der zuvor beschriebenen Vorgehensweise mit Hilfe des Prüfstands ermittelt worden. Anschließend ist er in die Prüfstand-Gasturbine implementiert und mit dieser im Prüfstand getestet worden. Das Ziel des Reglers ist es, das Verbrennungssystem zu stabilisieren und Auswirkungen von Störungen, die von verschiedenen Quellen innerhalb des Systems erzeugt werden, zu minimieren.

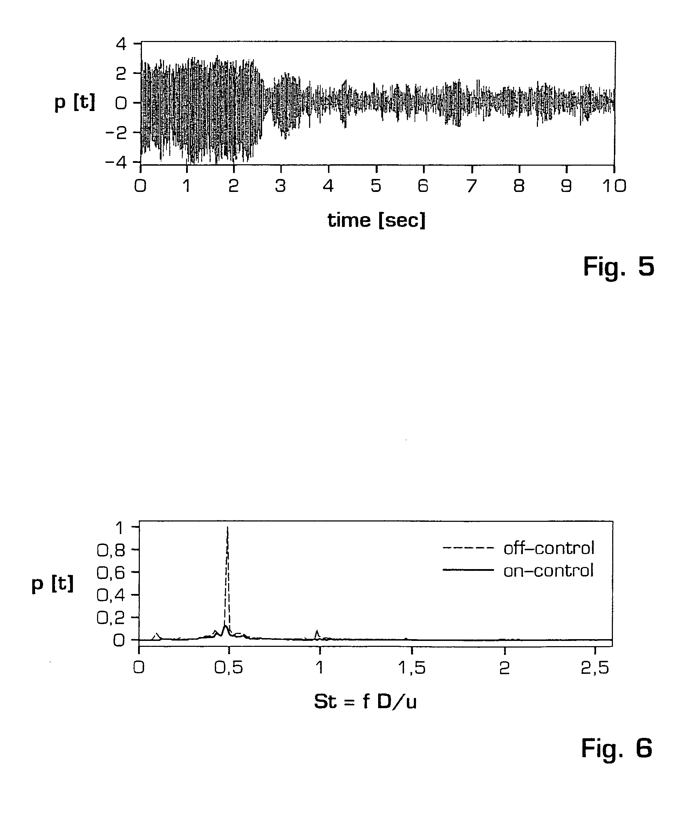

Der Brennstoffstromaktuator weist einen begrenzten Eingabebereich auf. In der Folge sollte das vom Regler an den Aktuator gesandte Steuersignal innerhalb vorbestimmter Grenzen bleiben. Experimentelle Ergebnisse zeigen, dass ein Regler, der diese Reglerziele erfüllt, durch sogenannte $H_\infty$-Optimierung erzielt werden kann. Der auf diese Weise ermittelte Regler kann dann in einer Mono-Brenner-Umgebungsdruck-Prüfstand-Gasturbine zur Anwendung kommen. Tests haben gemäß Fig. 5 gezeigt, dass Pulsationsamplituden um mehr als 25dB reduziert werden können.

Fig. 6 zeigt den Verlauf einer spektralen Druckamplitude mit oder ohne Regelung für einen $H_\infty$-Regler, der mit Hilfe einer Ausführungsform der vorliegenden Erfindung hergeleitet worden ist.

Es ist festzuhalten, dass ein Regelungsverfahren, das nachweislich in einer Mono-Brenner-Umgebungsdruck-Prüfstand-Gasturbine zufriedenstellend arbeitet, nicht in einer Multi-Brenner-Hochdruck-Gasturbine anwendbar ist. Um den so ermittelten Regler in einer tatsächlichen Gasturbine anwenden zu können, ist die oben beschriebene Transformation von der Mono-Brenner-Umgebungsdruck-Prüfstand-Gasturbine in die jeweilige Multi-Brenner-Hochdruck-Gasturbine durchzuführen.

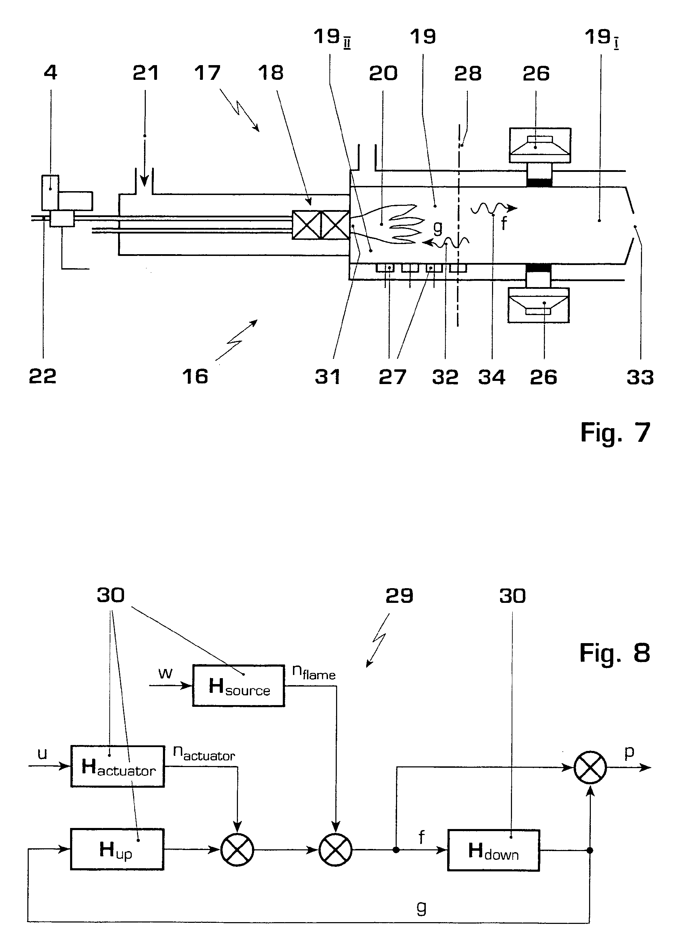

Entsprechend Fig. 7 kann der bereits in Fig. 1 gezeigte Prüfstand 16 zusätzlich mit Lautsprechern 26 ausgestattet sein, die beispielsweise flüssigkeitsgekühlt sind. Mit Hilfe der Lautsprecher 26 kann das Gesamtsystem des Prüfstands 16 mittels eines akustischen Signals angeregt werden. Die Lautsprecher 26 sind dabei an der Brennkammer 19 angeordnet. Ebenfalls an der Brennkammer 19 angeordnet sind mehrere in Strömungsrichtung hintereinander positionierte Mikrofone 27. Die Mikrofone 27 dienen zur Messung der Reaktion bzw. der Antwort des Systems auf die mit Hilfe der Lautsprecher 16 erzeugten Anregung.

In Fig. 7 ist mit punktierter Linie außerdem eine Referenzposition 28 eingetragen, die innerhalb der Brennkammer 19 virtuell einen stromab liegenden Bereich $19_I$ von einem stromaufliegenden Bereich $19_{II}$ der Brennkammer 19 trennt. Bemerkenswert ist, dass die Anordnung der Mikrofone 27 an der Referenzposition 28 beginnt und sich von dieser in Gegenstromrichtung, also in den stromaufliegenden Bereich $19_{II}$ der Brennkammer 19 hinein erstreckt.

Fig. 8 zeigt stark vereinfacht das zuvor genannte, hier mit 29 bezeichnete mathematische Gesamtmodell zur Beschreibung des akustischen Verhaltens des Verbrennungssystems. Dieses mathematische Gesamtmodell 29 ist hier exemplarisch in vier Untermodelle 30 unterteilt, und zwar erfindungsgemäß in wenigstens ein analytisches Untermodell und in wenigstens ein empirisches Untermodell, was im folgenden noch näher erläutert wird. Beim hier gezeigten exemplarischen Ausführungsbeispiel sind drei empirische Untermodelle und ein analytisches Untermodell vorgesehen. Die empirischen Untermodelle sind mittels experimenteller Messungen bestimmbar, was weiter oben bereits ausführlich erläutert worden ist. Im Unterschied dazu sind die analytischen Untermodelle mittels physikalischer Zusammenhänge berechenbar.

Im vorliegenden Beispiel ist ein erstes empirisches Untermodell mit $H_{up}$ bezeichnet. Das erste empirische Untermodell $H_{up}$ beschreibt die stromauf der Referenzposition oder Referenzstelle 28 in der Prüfstand-Brennkammer 19 ablaufenden dynamischen Vorgänge. Diese dynamischen Vorgänge umfassen beispielsweise die Wellenausbreitung von der Referenzstelle 28 bis zu einem Brennerauslass 31 sowie die akustischen Eigenschaften des Verbrennungsprozesses des Brenners 18 und einer hier nicht näher bezeichneten Plenumkammer der Brennkammer 19. Eine sich von der Referenzposition 28 in Richtung Brennerauslass 31 bewegende Welle ist in Fig. 7 mit 32 bezeichnet.

Ein zweites empirisches Untermodell ist hier mit $H_{down}$ bezeichnet und beschreibt die stromab der Referenzstelle 28 in der Prüfstand-Brennkammer 19 ablaufenden dynamischen Vorgänge. Die im stromab liegenden Bereich $19_I$ der Brennkammer 19 ablaufenden dynamischen Vorgänge umfassen wieder die Wellenausbreitung von der Referenzposition 28 bis zu einem Auslass 33 der Brennkammer 19. Ebenso werden Reflexionseffekte am Brennkammerauslass 33 berücksichtigt.

Ein drittes empirisches Modell wird hier mit $H_{actuator}$ bezeichnet und beschreibt die dynamischen Vorgänge einer Stelleinrichtung zum Einstellen einer den Brennern 18 zugeführten Brennstoffmenge sowie deren Einfluss auf den Verbrennungsprozess. Besagte Stelleinrichtung ist hier der Brennstoffstromaktuator 4. Außerdem berücksichtigt das dritte empirische Untermodell $H_{actuator}$ die Wellenausbreitung von der Flamme 20 bis zur Referenzstelle 28. Die Wellenausbreitung in der Stromrichtung ist in Fig. 7 durch eine Pfeil 34 symbolisiert.

Im vorliegenden Fall ist nur ein analytisches Untermodell vorgesehen, das mit $H_{source}$ bezeichnet ist. Dieses analytische Modell $H_{source}$ beschreibt die akustische Störquelle des Verbrennungsprozesses, der in der Regel durch die Turbulenz der Flamme 20 definiert ist.

Für die Bestimmung der empirischen Untermodelle, d.h. für die Identifikation der empirischen Untermodelle, wird vorausgesetzt bzw. angenommen, dass alle Untermodelle 30 stabil sind, und dass mögliche Instabilitäten ausschließlich durch die Rückkopplungsschleife 2 der Regeleinrichtung 23 verursacht sind. Hierdurch kann ein Gesamtmodell bzw. Gesamtsystem identifiziert werden, von dem nicht bekannt ist, ob es asymptotisch stabil ist oder nicht.

Für die Identifikation der einzelnen empirischen Untermodelle wird schrittweise vorgegangen, derart, dass jedes empirische Untermodell separat identifiziert wird. Bemerkenswert ist dabei, dass während der Identifikation eines empirischen Untermodells zumindest eines der anderen Untermodelle 30 modifiziert bzw. variiert wird. Beispielsweise können in dem einen oder anderen Untermodell 30 geometrische Randbedingungen und/oder Betriebsparameter variiert werden. Wesentlich ist, dass das aktuell zu bestimmende bzw. zu identifizierende Untermodell hierbei nicht variiert wird.

Besagte Variationen werden so ausgeführt, dass das gesamte System nur sehr kleine Pulsationsamplituden aufweist, die gewährleisten, dass das Gesamtsystem eine asymptotische Stabilität besitzt.

Wenn beispielsweise das zweite empirische Untermodell $H_{down}$ identifiziert werden soll, wird die Ausgangsgröße des ersten empirischen Untermodells $H_{up}$ vorübergehend reduziert, um vergleichsweise kleine Pulsationsamplituden zu gewährleisten. Im umgekehrten Fall, wird während der Identifikation des ersten empirischen Untermodells $H_{up}$ der Ausgangswert des zweiten empirischen Untermodells $H_{down}$ reduziert. Die identifizierten Untermodelle 30 können in oder zu einem Feedbacksystem kombiniert werden, das ein Gesamtsystem repräsentiert, welches im Bereich seines Nennbetriebspunkts linearisiert ist. Ein derartiges Modell umfasst nicht-lineare dynamische Effekte des Systems nicht, was jedoch kein Problem darstellt, da ein Regler, der ein linearisiertes System stabilisieren kann, regelmäßig auch ein nicht-lineares System stabilisieren kann.

Die vorgeschlagene Untersuchung der Brennkammer 19 des Prüfstands 16 basiert hauptsächlich auf akustischen Eigenschaften der Brennkammer 19 bzw. der damit ausgestatteten Gasturbine 17. Bei jedem Identifikationsschritt wird das System durch ein Anregungssignal angeregt oder erregt. Anregungssignale können beispielsweise mit den Lautsprechern 26, mit dem Brennstoffstromaktuator 4 und über die Geräuschentwicklung der Flamme 20 bereitgestellt werden. Die Antwort oder Reaktion des Systems wird mit dem Feld aus Mikrofonen 27 gemessen. Das akustische Feld des Systems kann als Summe von zwei Wellen ausgedrückt werden, die sich in entgegengesetzten Richtungen ausbreiten. Die stromauf wandernde akustische Welle 32 und die stromab wandernde akustische Welle 34 korrelieren mit den Riemann-Konstanten f und g und werden von den Drucksignalen extrahiert, was mit Hilfe des Mikrofonfeldes möglich ist. Die Riemann-Konstanten f und g können bei der Bestimmung und/oder bei der Berechnung von Untermodellen verwendet werden.

Beispielsweise lassen sich die in Fig. 8 gezeigten vier Untermodelle 30 wie folgt bestimmen bzw. berechnen:

Zur Bestimmung des ersten empirischen Untermodells $H_{up}$ kann das Gesamtsystem mit Hilfe der Lautsprecher 26 angeregt werden. Anschließend wird eine Frequenzantwort des ersten empirischen Untermodells $H_{up}$ mit Hilfe der Mikrofone 27 gemessen. Anschließend kann eine Querkorrelation zwischen der Frequenzantwort und der Anregung des Gesamtmodells ermittelt werden. Desweiteren lassen sich aus den Messungen die Riemann-Konstanten f und g berechnen, siehe oben. Schließlich kann optional ein Verhältnis der Riemann-Konstanten berechnet werden, was letztlich die Transferfunktion des ersten empirischen Untermodells repräsentiert: $H_{up}$ = f/g.

Das zweite empirische Untermodell $H_{down}$ wird grundsätzlich auf ähnliche Weise wie das erste empirische Untermodell $H_{up}$ ermittelt. Allerdings wird die Anregung des Gesamtmodells beim zweiten empirischen Untermodell mit Hilfe des Brennstoffstromaktuators 4 erzeugt, der hierzu auf geeignete Weise angesteuert wird. Auch hier wird dann die Frequenzantwort des zweiten empirischen Untermodells $H_{down}$, vorzugsweise mittels der Mikrofone 27, gemessen. Ebenso lässt sich auch hier eine Querkorrelation zwischen der Frequenzantwort und der Anregung des Gesamtmodells ermitteln.

Für die Bestimmung des dritten empirischen Modells $H_{actuator}$ kann das Gesamtmodell dadurch angeregt werden, dass an die Stelleinrichtung, also an den Brennstoffstromaktuator 4, entsprechende Betätigungssignale u gesendet werden. Dies entspricht grundsätzlich der zuvor beschriebenen Vorgehensweise zur Identifikation des zweiten empirischen Untermodells $H_{down}$. Allerdings sind hier jetzt die Betätigungssignale u von erhöhter Bedeutung. Auch hier wird die Frequenzantwort des dritten empirischen Untermodells $H_{actuator}$ gemessen. Desweiteren lässt sich eine Querkorrelation zwischen der Frequenzantwort und der Anregung des Gesamtmodells ermitteln, wobei hier die Riemann-Konstanten f und g sowie das Betätigungssignal u berücksichtigt werden. Die Transferfunktionen für das dritte empirische Untermodell ergibt sich wie folgt: $H_{actuator}$ = (f - g * $H_{up}$)/u.

Das analytische Untermodell $H_{source}$ bzw. dessen Transferfunktion lässt sich wie folgt berechnen: $H_{source}$ = (f - g * $H_{up}$). Für Eingangssignal der Transferfunktion des analytischen Untermodells $H_{source}$ wird ein Rauschsignal (white noise) angenommen.

Während der Messung des zweiten empirischen Untermodells $H_{down}$ wird das Ausgangssignal des ersten empirischen Untermodells $H_{up}$ dadurch variiert, dass Betriebsbedingungen oder Betriebsparameter ausgewählt werden, für die ein Betriebsverhalten des Gesamtsystems mit niedrigen Pulsationsamplituden erwartet wird. Bei der Messung des ersten empirischen Untermodells $H_{up}$ können die Ausgangssignale des zweiten empirischen Untermodells $H_{down}$ dadurch variiert werden, dass am Auslass 33 der Brennkammer 19 eine Drosselplatte montiert wird.

Nach dem alle Untersysteme oder Untermodelle 30 identifiziert bzw. bestimmt und berechnet worden sind, kann das Gesamtsystem bzw. das Gesamtmodell zu einem akustischen Netzwerk 29 zusammengefügt werden, das in Fig. 8 wiedergegeben ist. Um dynamische Modelle aus den experimentell gewonnenen Daten ableiten zu können, werden rationale Polynome in Gleichungen der Laplace-Koeffizienten in die Frequenzantworten der einzelnen Untermodelle 30 integriert.

**Bezugszeichenliste**

| 1 | Gesamtmodell |
|---|---|
| 2 | Rückkopplungsschleife |
| 3 | Drucksignalgeber |
| 4 | Brennstoffstromaktuator |
| 5 | Regler |
| 6 | Regelalgorithmus |
| 7 bis 15 | Block/Schritt |
| 16 | Prüfstand |
| 17 | Mono-Brenner-Umgebungsdruck-Prüfstand-Gasturbine |
| 18 | Brenner |
| 19 | Brennkammer |
| 20 | Flamme |
| 21 | Frischluftversorgung |
| 22 | Brennstoffversorgung |
| 23 | Regeleinrichtung |
| 24 | Gasturbine |
| 25 | Brennkammer |
| 26 | Lautsprecher |
| 27 | Mikrofon |
| 28 | Referenzposition |
| 29 | mathematisches Modell |
| 30 | Untermodell |
| 31 | Auslass von 18 |
| 32 | Schallwelle |
| 33 | Auslass von 19 |
| 34 | Schallwelle |

| $H_{up}$ | erstes empirischen Untermodell |
|---|---|
| $H_{down}$ | zweites empirisches Untermodell |
| $H_{actuator}$ | drittes empirisches Untermodell |
| $H_{source}$ | analytisches Untermodell |
| P | Plenum |
| B | Brenner |
| F | Flamme |
| C | Brennkammer |
| E | Auslass von C |

**Patentansprüche**

1. Verfahren zum Herstellen einer Regeleinrichtung (23) zum Kontrollieren von Druckpulsationen eines Verbrennungsprozesses, der in einer mit Hochdruck betriebenen Brennkammer (25) einer mit mehreren Brennern (18) arbeitenden Gasturbine (24) abläuft, wobei ein Regler (5) der Regeleinrichtung (23) mit einem Regelalgorithmus (6) arbeitet, der auf einem mathematischen Gesamtmodell (29) des akustischen Verhaltens des Verbrennungssystems basiert, wenigstens umfassend die Schritte:

   - Unterteilen des Gesamtmodells (29) in mehrere Untermodelle (30), von denen wenigstens eines als analytisches Untermodell, das mittels physikalischer Zusammenhänge berechenbar ist, und wenigstens eines als empirisches Untermodell, das mittels experimenteller Messungen bestimmbar ist, ausgestaltet ist,
   - Bestimmen des wenigstens einen empirischen Untermodells, indem die experimentellen Messung an einem Prüfstand (16) durchgeführt werden, dessen Prüfstand-Gasturbine (17) nur einen einzigen Prüfstand-Brenner (18) und eine mit atmosphärischem Umgebungsdruck arbeitende Prüfstand-Brennkammer (19) aufweist,
   - Berechnen des wenigstens einen analytischen Untermodells unter Berücksichtung der Ergebnisse der experimentellen Messungen zur Bestimmung des wenigstens einen empirischen Untermodells,
   - Vernetzen der bestimmten und berechneten Untermodelle (30) mit rechnerischer Transformation der Mono-Brenner-Umgebungsdruck-Prüfstand-Gasturbine (17) auf die Multi-Brenner-Hochdruck-Gasturbine (24).

2. Verfahren nach Anspruch 1,

**dadurch gekennzeichnet,**
**dass** der Regler (5) mittels der vernetzten Untermodelle (30) hergeleitet oder abgeleitet wird.

3. Verfahren nach Anspruch 1 oder 2,
   **dadurch gekennzeichnet,**

   - **dass** Wechselwirkungen wenigstens eines Brenners (18) und der Brennkammer (19, 25) durch ein empirisches Untermodell repräsentiert sind, und/oder
   - **dass** Reaktionen einer Stelleinrichtung (4) zum Einstellen einer wenigstens einem Brenner (18) zugeführten Brennstoffmenge durch ein empirisches Untermodell repräsentiert sind, und/oder
   - **dass** dynamische Vorgänge, die innerhalb der Prüfstand-Brennkammer (19) von einer Referenzstelle (28) bis zum Austritt (31) des Prüfstand-Brenners (18) in Gegenstromrichtung ablaufen, durch ein empirisches Untermodell repräsentiert sind, und/oder
   - **dass** dynamische Vorgänge, die innerhalb der Prüfstand-Brennkammer (19) von einer Referenzstelle (28) bis zum Austritt (33) der Prüfstand-Brennkammer (19) in Stromrichtung ablaufen, durch ein empirisches Untermodell repräsentiert sind, und/oder
   - **dass** die Ausbreitung von Druckwellen in der Brennkammer (19, 25) durch ein analytisches Untermodell repräsentiert ist.

4. Verfahren nach einem der Ansprüche 1 bis 3,
   **dadurch gekennzeichnet,**

   - **dass** beim Bestimmen eines empirischen Untermodells wenigstens ein anderes Untermodell hinsichtlich Geometrie und/oder Betriebsbedingungen variiert wird, während das zu bestimmende empirische Untermodell nicht variiert wird, und/oder
   - **dass** die Variationen des wenigstens einen anderen Untermodells so durchgeführt werden, dass das Gesamtmodell (29) asymptotisch stabil ist und/oder relativ kleine oder unkritische Pulsationsamplituden aufweist.

5. Verfahren nach einen der Ansprüche 1 bis 4,
   **dadurch gekennzeichnet,**

   - **dass** beim Bestimmen des wenigstens einen empirischen Untermodells mittels wenigstens eines Lautsprechers (26) Druckpulse einer bestimmten Frequenz an einer Referenzstelle (28) in die Prüfstand-Brennkammer (19) stromab des Prüfstand-Brenners (18) eingeleitet werden, und/oder
   - **dass** beim Bestimmen des wenigstens einen empirischen Untermodells der Druck einer Luftversorgung (21) des Prüfstand-Brenners (18) und/oder eine Brennstoffzuführung (22) des Prüfstand-Brenners (18) moduliert werden, und/oder
   - **dass** beim Bestimmen des wenigstens einen empirischen Untermodells eine Reaktion des Gesamtmodells (29) mittels mehrerer zwischen der Referenzstelle (28) und dem Austritt (31) des Prüfstand-Brenners (18) in Stromrichtung nebeneinander angeordneter Mikrofone (27) gemessen wird, und/oder
   - **dass** beim Bestimmen des wenigstens einen empirischen Untermodells aus den mit den Mikrofonen (27) durchgeführten Messungen die Riemann-Konstanten (f) und (g) ermittelt werden, die beim Bestimmen eines anderen empirischen Untermodells und/oder beim Berechnen eines analytischen Untermodells herangezogen werden.

6. Verfahren nach einem der Ansprüche 1 bis 5,
   **dadurch gekennzeichnet,**
   **dass** ein (erstes) empirisches Untermodell ($H_{up}$), das die stromauf einer Referenzstelle (28) in der Prüfstand-Brennkammer (19) ablaufenden dynamischen Vorgänge beschreibt, dadurch bestimmt wird,

   - **dass** das Gesamtmodell mit wenigstens einem Lautsprecher (26) angeregt wird,
   - **dass** eine Frequenzantwort des ersten empirischen Untermodells ($H_{up}$) gemessen wird,
   - **dass** eine Querkorrelation zwischen der Frequenzantwort und der Anregung des Gesamtmodells (29) ermittelt wird,
   - **dass** die Riemann-Konstanten (f) und (g) berechnet werden,
   - **dass** insbesondere ein Verhältnis der Riemann-Konstanten (f) zu (g) berechnet wird.

7. Verfahren nach einem der Ansprüche 1 bis 6,

**dadurch gekennzeichnet,**
**dass** ein (zweites) empirisches Untermodell ($H_{down}$), das die stromab einer Referenzstelle (28) in der Prüfstand-Brennkammer (19) ablaufenden dynamischen Vorgänge beschreibt, dadurch bestimmt wird,

- **dass** das Gesamtmodell (29) mittels entsprechender Betätigung einer Stelleinrichtung (4) zum Einstellen einer den Prüfstand-Brenner (18) zugeführten Brennstoffmenge angeregt wird,
- **dass** eine Frequenzantwort des zweiten empirischen Untermodells ($H_{down}$) gemessen wird,
- **dass** eine Querkorrelation zwischen der Frequenzantwort und der Anregung des Gesamtmodells (29) ermittelt wird.

8. Verfahren nach einem der Ansprüche 1 bis 7,
   **dadurch gekennzeichnet,**
   **dass** ein (drittes) empirisches Untermodell ($H_{actuator}$), das die dynamischen Vorgänge einer Stelleinrichtung (4) zum Einstellen einer dem Brenner (18) zugeführten Brennstoffmenge sowie deren Einfluss auf den Verbrennungsprozess beschreibt, dadurch bestimmt wird,

   - **dass** das Gesamtmodell (29) mittels an die Stelleinrichtung (4) gesendeter Betätigungssignale (u) angeregt wird,
   - **dass** eine Frequenzantwort des dritten empirischen Untermodells ($H_{actuator}$) gemessen wird,
   - **dass** unter Berücksichtung der Riemann-Konstanten (f) und (g) und des Betätigungssignals (u) eine Querkorrelation zwischen der Frequenzantwort und der Anregung des Gesamtmodells (29) ermittelt wird.

9. Verfahren nach einem der Ansprüche 1 bis 8,
   **dadurch gekennzeichnet,**
   **dass** ein analytisches Untermodell ($H_{source}$), das die akustische(n) Störquelle(n) des Verbrennungsprozesses beschreibt, aus den Riemann-Konstanten (f) und (g) und aus der Querkorrelation des ersten empirischen Untermodells ($H_{up}$) berechnet wird.

10. Verfahren nach einem der Ansprüche 1 bis 9,
    **dadurch gekennzeichnet,**

    - **dass** beim Bestimmen des zweiten empirischen Untermodells ($H_{down}$) das erste empirische Untermodell ($H_{up}$) dadurch variiert wird, dass dafür ein Betriebszustand eingestellt wird, der sicher niedrige oder unktrische Druckpulsationsamplituden aufweist, und/oder
    - **dass** beim Bestimmen des ersten empirischen Untermodells ($H_{up}$) das zweite empirische Untermodell ($H_{down}$) dadurch variiert wird, dass am Austritt (33) der Brennkammer (19) eine Drosselplatte angeordnet wird.

**Claims**

1. Method for producing a control device (23) for controlling pressure pulsations in a combustion process that is running in a combustion chamber (25), operated at high pressure, of a gas turbine (24) operating with a number of burners (18), a closed loop controller (5) of the control device (23) operating with the aid of a control algorithm (6) that is based on an overall mathematical model (29) of the acoustic behavior of the combustion system, comprising at least the steps of:

   - subdividing the overall model (29) into a number of submodels (30) of which at least one is configured as an analytical submodel that can be calculated by means of physical relationships, and at least one is configured as an empirical submodel that can be determined by means of experimental measurements,
   - determining the at least one empirical submodel by carrying out the experimental measurement on a test facility (16) whose test facility gas turbine (17) has only a single test facility burner (18) and a test facility combustion chamber (19) operating at atmospheric ambient pressure,
   - calculating the at least one analytical submodel by taking account of the results of the experimental measurements in order to determine the at least one empirical submodel, and
   - networking the determined and calculated submodels (30) with the aid of computational transformation of the single burner ambient pressure test facility gas turbine (17) to form the multi burner high-pressure gas turbine (24).

2. Method according to Claim 1,

**characterized**

**in that** the closed loop controller (5) is derived by means of the networked submodels (30).

3. Method according to Claim 1 or 2,
   **characterized**

   - **in that** interactions of at least one burner (18) and the combustion chamber (19, 25), are represented by an empirical submodel, and/or
   - **in that** reactions of a control device (4) for setting a fuel quantity fed to at least one burner (18) are represented by an empirical submodel, and/or
   - **in that** dynamic processes that run in the counterflow direction inside the test facility combustion chamber (19) from a reference position (28) up to the exit (31) of the test facility burner (18) are represented by an empirical submodel, and/or
   - **in that** dynamic processes that run in the flow direction inside the test facility combustion chamber (19) from a reference position (28) up to the exit (33) of the test facility combustion chamber (19) are represented by an empirical submodel, and/or
   - **in that** the propagation of the pressure waves in the combustion chamber (19, 25) is represented by an analytical submodel.

4. Method according to one of Claims 1 to 3,
   **characterized**

   - **in that** during the determination of an empirical submodel at least one other submodel is varied with regard to geometry and/or operating conditions, while the empirical submodel to be determined is not varied, and/or
   - **in that** the variations in the at least one other submodel are carried out such that the overall model (29) is asymptotically stable and/or has relatively small or uncritical pulsation amplitudes.

5. Method according to one of Claims 1 to 4,
   **characterized**

   - **in that** during the determination of the at least one empirical submodel at least one loudspeaker (26) is used to introduce pressure pulses of a specific frequency at a reference position (28) into the test facility combustion chamber (19) downstream of the test facility burner (18), and/or
   - **in that** during the determination of the at least one empirical submodel the pressure of an air supply (21) of the test facility burner (18) and/or a fuel feed (22) of the test facility burner (18) are modulated, and/or
   - **in that** during the determination of the at least one empirical submodel a reaction of the overall model (29) is measured by means of a number of microphones (27) arranged next to one another in the flow direction arranged between the reference position (28) and the exit (31) of the test facility burner (18), and/or
   - **in that** the Riemann constants (f) and (g) that are used during the determination of another empirical submodel and/or during the calculation of an analytical submodel are determined during the determination of the at least one empirical submodel from the measurements carried out with the microphones (27).

6. Method according to one of Claims 1 to 5,
   **characterized**
   **in that** a (first) empirical submodel ($H_{up}$) that describes the dynamic processes running upstream of a reference position (28) in the test facility combustion chamber (19) are determined by virtue of the fact

   - that the overall model is excited by at least one loudspeaker (26),
   - that a frequency response of the first empirical submodel ($H_{up}$) is measured,
   - that a cross correlation is determined between the frequency response and the excitation of the overall model (29),
   - that the Riemann constants (f) and (g) are calculated, and
   - that, in particular, a ratio of the Riemann constants (f) to (g) is calculated.

7. Method according to one of Claims 1 to 6,
   **characterized**
   **in that** a (second) empirical submodel ($H_{down}$) that describes the dynamic processes running downstream of a reference position (28) in the test facility combustion chamber (19) are determined by virtue of the fact

- that the overall model (29) is excited by means of a corresponding actuation of a control device (4) for setting a fuel quantity fed to the test facility burner (18),
- that a frequency response of the second empirical submodel ($H_{down}$) is measured and
- that a cross correlation is determined between the frequency response and the excitation of the overall model (29).

8. Method according to one of Claims 1 to 7,
   **characterized**
   **in that** a (third) empirical submodel ($H_{actuator}$) that describes the dynamic operations of a control device (4) for setting a fuel quantity fed to the burner (18), as well as the influence thereof on the combustion process, is determined by virtue of the fact

   - that the overall model (29) is excited by means of actuation signals (u) sent to the control device (28),
   - that a frequency response of the third empirical submodel ($H_{actuator}$) is measured, and
   - that a cross correlation between the frequency response and the excitation of the overall model (29) is determined by taking account of the Riemann constants (f) and (g) and of the actuation signal (u).

9. Method according to one of Claims 1 to 8,
   **characterized**
   **in that** an analytical submodel ($H_{source}$) that describes the acoustic interference source(s) of the combustion process is calculated from the Riemann constants (f) and (g) and from the cross correlation of the first empirical submodel ($H_{up}$).

10. Method according to one of Claims 1 to 9,
    **characterized**

    - **in that** during the determination of the second empirical submodel ($H_{down}$) the first empirical submodel ($H_{up}$) is varied by virtue of the fact that an operating state is set therefor that reliably has low or uncritical pressure pulsation amplitudes, and/or
    - **in that** during the determination of the first empirical submodel ($H_{up}$) the second empirical submodel ($H_{down}$) is varied by virtue of the fact that a throttle plate is arranged at the exit (33) of the combustion chamber (19).

**Revendications**

1. Procédé pour la fabrication d'un dispositif de réglage (23) destiné au contrôle des pulsations de pression d'un processus de combustion d'une chambre de combustion (25) exploitée à haute pression d'une turbine à gaz (24) fonctionnant avec plusieurs brûleurs (18), un régulateur (5) du dispositif de réglage (23) fonctionnant avec un algorithme de réglage (6), basé sur un modèle mathématique global (29) du comportement acoustique du système de combustion, comprenant au moins les étapes de:

   - subdivision du modèle global (29) en différents sous-modèles (30), parmi lesquels au moins l'un d'eux est un sous-modèle analytique qui est calculable au moyen de rapports physiques, et au moins l'un d'eux est un sous-modèle empirique qui est déterminable au moyen des mesures expérimentales,
   - détermination dudit au moins un sous-modèle empirique en réalisant la mesure expérimentale au niveau d'un banc de contrôle (16), dont la turbine à gaz (17) de banc de contrôle ne comporte qu'un seul brûleur (18) de banc de contrôle et une chambre de combustion (19) de banc de contrôle fonctionnant sous pression atmosphérique ambiante,
   - calcul dudit au moins un sous-modèle analytique en tenant compte des résultats des mesures expérimentales pour la détermination dudit au moins un sous-modèle empirique,
   - mise en réseau du sous-modèle déterminé et calculé (30) avec transformation mathématique de la turbine à gaz de banc de contrôle à atmosphère ambiante à un brûleur (17) sur la turbine à gaz à haute pression à plusieurs brûleur (24).

2. Procédé selon la revendication 1, **caractérisé en ce que**
   le régulateur (5) découle ou est déduit du sous-modèle (30) en réseau.

3. Procédé selon la revendication 1 ou 2, **caractérisé en ce que**

- des interactions d'au moins un brûleur (18) et de la chambre de combustion (19, 25) sont représentés par un sous-modèle empirique, et/ou

- **en ce que** des réactions d'un mécanisme de réglage (4) pour le réglage d'une quantité de combustible alimentée à au moins un brûleur (18) sont représentées par un sous-modèle empirique, et/ou

- **en ce que** des processus dynamiques qui se produisent à contre-courant à l'intérieur de la chambre de combustion (19) du banc de contrôle d'un point de référence (28) jusqu'à la sortie (31) du brûleur (18) du banc de contrôle sont représentés par un sous-modèle empirique, et/ou

- **en ce que** des processus dynamiques qui se produisent dans le sens du courant à l'intérieur de la chambre de combustion (19) du banc de contrôle d'un point de référence (28) jusqu'à la sortie (33) de la chambre de combustion (19) du banc de contrôle sont représentés par un sous-modèle empirique, et/ou

- **en ce que** la propagation des ondes de pression dans la chambre de combustion (19, 25) est représentée par un sous-modèle analytique.

4. Procédé selon l'une des revendications 1 à 3,
   **caractérisé en ce que**

   - lors de la détermination d'un sous-modèle empirique au moins un autre sous-modèle varie au regard de la géométrie et/ou des conditions de fonctionnement, tandis que le sous-modèle empirique à déterminer ne varie pas, et/ou
   - **en ce que** les variations dudit au moins un autre sous-modèle sont réalisées de telle sorte que le modèle global (29) est stable au niveau asymptotique et/ou relativement petit ou comporte des amplitudes de pulsation non critiques.

5. Procédé selon l'une des revendications 1 à 4,
   **caractérisé en ce que**

   - lors de la détermination dudit au moins un sous-modèle empirique, des impulsions de pression d'une certaines fréquence sont générées au moyen d'au moins un haut-parleur (26) au niveau d'un point de référence (28) dans la chambre de combustion (19) du banc de contrôle en aval du brûleur (18) du banc de contrôle, et/ou
   - **en ce que** lors de la détermination dudit au moins un sous-modèle empirique, la pression de l'alimentation pneumatique (21) du brûleur (18) du banc de contrôle et/ou d'une alimentation en combustible (22) du brûleur (18) du banc de contrôle sont modulées, et/ou
   - **en ce que** lors de la détermination dudit au moins un sous-modèle empirique, une réaction du modèle global (29) est mesurée au moyen de plusieurs microphones (27) juxtaposés ordonnées entre le point de référence (28) et la sortie (31) du brûleur (18) du banc de contrôle dans le sens du courant, et/ou
   - **en ce que** lors de la détermination dudit au moins un sous-modèle empirique, les constantes de Riemann (f) et (g) sont établies à partir des mesures réalisées par les microphones (27), constantes qui sont consultées lors de la détermination d'un autre sous-modèle empirique et/ou lors du calcul d'un sous-modèle analytique.

6. Procédé selon l'une des revendications 1 à 5,
   **caractérisé en ce,**
   **Qu'**un (premier) sous-modèle empirique ($H_{up}$), qui décrit les processus dynamiques se déroulant en amont d'un point de référence (28) dans la chambre de combustion (19) du banc de contrôle, est déterminé en ce que

   - le modèle global est excité avec au moins un haut-parleur (26),
   - une réponse de fréquence du premier sous-modèle empirique ($H_{up}$) est mesurée,
   - une corrélation croisée est établie entre la réponse de fréquence et l'excitation du modèle global (29),
   - les constantes de Riemann (f) et (g) sont calculées,
   - en particulier un rapport des constantes de Riemann (f) à (g) est calculé.

7. Procédé selon l'une des revendications 1 à 6,
   **caractérisé en ce**
   **qu'**un (deuxième) sous-modèle empirique ($H_{down}$), qui décrit les processus dynamiques se déroulant en aval d'un point de référence (28) dans la chambre de combustion (19) du banc de contrôle, est déterminé en ce que

   - le modèle global (29) est excité au moyen de l'actionnement correspondant d'un mécanisme de réglage (4) pour le réglage d'une quantité de combustible alimentée dans le brûleur (18) du banc de contrôle (18).
   - une réponse de fréquence du deuxième sous-modèle empirique ($H_{down}$) est mesurée,

- une corrélation croisée est établie entre la réponse de fréquence et l'excitation du modèle global (29).

8. Procédé selon l'une des revendications 1 à 7,
**caractérisé en ce**

- **qu'**un (troisième) sous-modèle empirique ($H_{actuator}$), qui décrit les processus dynamiques d'un mécanisme de réglage (4) pour le réglage d'une quantité de combustible alimentée dans le brûleur (18) ainsi que son influence sur le processus de combustion, est déterminé en ce que
- le modèle global (29) est excité au moyen du signal d'actionnement émis (u) au niveau du mécanisme de réglage (4),
- une réponse de fréquence du troisième sous-modèle empirique ($H_{actuator}$) est mesurée,
- une corrélation croisée est établie entre la réponse de fréquence et l'excitation du modèle global (29) en tenant compte des constantes de Riemann (f) et (g) et du signal d'actionnement (u).

9. Procédé selon l'une des revendications 1 à 8,
**caractérisé en ce**
**qu'**un sous-modèle analytique ($H_{source}$), qui décrit la/les source(s) de perturbation acoustique(s) du processus de combustion, est calculé à partir des constantes de Riemann (f) et (g) et à partir de la corrélation croisée du premier sous-modèle empirique ($H_{up}$).

10. Procédé selon l'une des revendications 1 à 9,
**caractérisé en ce que**

- lors de la détermination du deuxième sous-modèle empirique ($H_{down}$), le premier sous-modèle empirique ($H_{up}$) varie **en ce qu'**un état de fonctionnement est réglé, lequel comporte des amplitudes de pulsation de pression sûrement basses ou non critiques, et/ou
- **en ce que** lors de la détermination du premier sous-modèle empirique ($H_{up}$), le deuxième sous-modèle empirique ($H_{down}$) varie **en ce qu'**une plaque d'étranglement est ordonnée à la sortie (33) de la chambre de combustion (19).

Fig. 1

EP 1 703 344 B1

Fig. 2

Fig. 3

Fig. 4

Fig. 5

Fig. 6

EP 1 703 344 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10325455 A1